# EUROPÄISCHE PATENTSCHRIFT

(11) **EP 1 943 098 B1**
(45) Veröffentlichungstag und Bekanntmachung des Hinweises auf die Patenterteilung: **05.05.2010**
(21) Anmeldenummer: 06818035.5
(22) Anmeldetag: 26.10.2006
(51) Int. Cl.: B32B 27/12

(54) **FRÄS- UND/ODER DREHWERKZEUG**
MILLING AND/OR LATHE TOOL
OUTIL DE FRAISAGE ET / OU DE TOURNAGE

(30) Priorität: 28.10.2005 DE 102005051695
(43) Veröffentlichungstag der Anmeldung: 16.07.2008
(73) Patentinhaber: Pokolm Frästechnik GmbH & Co. KG, 33428 Harsewinkel (DE)
(72) Erfinder: Albert, Bernhard, 27711 Osterholz-Scharmbeck (DE)
(74) Vertreter: Flötotto, Hubert
(86) Internationale Anmeldenummer: PCT/DE2006/001910
(87) Internationale Veröffentlichungsnummer: WO 2007/048405

(56) Entgegenhaltungen:
- WO-A-2005/118192
- AU-A- 47 364
- CH-A- 480 120
- DD-A1- 118 543
- DE-A- 4 320 409
- DE-A1- 10 304 732
- DE-A1-102004 006 388
- SU-A- 1 450 920
- US-A- R E26 637
- US-A- 2 885 766
- US-A- 2 933 801
- US-A- 4 502 734
- US-A- 5 456 522
- US-A- 5 478 175
- US-A1- 2005 047 885

## Beschreibung

Die Erfindung betrifft ein Fräs- und/oder Drehwerkzeug zum spanabhebenden Bearbeiten von Werkstücken gemäß dem Oberbegriff des Anspruchs 1.

US 2,885,766 offenbart ein solches Werkzeug.

Die bekannten Wendeplatten mit einer durchgehenden, kreisrunden Schneidkante werden an entsprechenden Fräsköpfen, insbesondere zum Planfräsen, Kopierfräsen, Schlichtfräsen und Schruppfräsen verwendet. Diese im Wesentlichen kreisscheibenförmig ausgebildeten Wendeplatten bilden auf einer Seite ihrer Kreisscheibenform zwischen Mantelfläche und Kreisscheibenfläche die Schneidkante. Dabei soll die Begrifflichkeit "kreisscheibenförmige" Wendeplatte auch als Kegelstumpf ausgebildete Wendeplatten umfassen, bei denen bevorzugt die umlaufende Kante an der Seite mit größerem Durchmesser die Schneidkante bildet. Derartige Wendeplatten weisen hinsichtlich ihrer zentralen Symmetrieachse eine koaxiale Aufnahmebohrung zum Befestigen der Wendeplatte am Werkzeugkörper auf. In der DE 10 2004 006 388 A1 sind Befestigungsmöglichkeiten dafür beschrieben. Die kreisscheibenförmige Wendeplatte ist an einem als Fräskopf ausgebildeten Werkzeug angeordnet. Häufig werden mehrere, meist äquidistant verteilte Wendeplatten, beispielsweise 3, 5, 6, 8, 10 Wendeplatten an einem Fräskopf, angeordnet.

Zum spanabhebenden Bearbeiten von Werkstücken sind Wendeplattenfräser bekannt. Beispielhaft wird auf die DE 10 2004 006 388 A1 verwiesen, in der ein Wendeplattenfräser bzw. Wendeplatten beschrieben sind, die eine präzise Zentrierung erlauben. Bei diesem Gegenstand werden die Wendeplatten, wie im Stand der Technik allgemein üblich, fest mit dem Werkzeugträger verbunden. Bei Abnutzung der Schneidkante der Wendeplatte kann diese ausgetauscht oder nach dem Lösen verdreht und wieder angezogen werden.

Nachteilig an der bekannten festen Fixierung der Wendeplatten am Werkzeugkörper ist, dass bei der Abnutzung der Schneidkante der Wendeplatte das Schneidergebnis bei der spanabhebenden Bearbeitung und damit die Oberflächengüte des bearbeiteten Werkstücks verschlechtert wird und ggf. Überschreitungen der Toleranzen entstehen könnten. Je nach zu bearbeitenden Werkstoffen sind daher die Standzeiten der Wendeplatten stark begrenzt. Beim Verdrehen bzw. Wenden der Wendeplatten an dem Werkzeug entsteht jedoch ein erheblicher im Wesentlichen manueller Arbeitsaufwand, der einen hohen Anteil der Gesamtbearbeitungskosten beim Fräsen und/oder Drehen einnimmt.

Ferner ist eine Fräsbearbeitung von metallischen Werkstücken mittels Fräskopf bekannt, der aktive Elemente aus runden, drehbar gelagerten Schneidscheiben aufweist, die während des Bearbeitungsvorganges eine durch den Spanungsprozess und die Schrägstellung der Schneidscheibenachse zur Schnittrichtung kinematisch bedingte selbsttätige Rotationsbewegung ausführen, wie einleitend in der DD 118 543 erwähnt. Da das Schneidwerkzeug durch die frei drehbare Lagerung gegenüber Werkzeugen mit feststehender Schneide eine geringere Starrheit aufweist, treten bei derartiger Fräsbearbeitung - jedenfalls bei größeren Schnitttiefen bzw. größeren Vorschüben - Rattermarken auf der Werkstückoberfläche auf. Entsprechend schlägt die DD 118 543 vor, am Fräskopf an dessen Stirnseite gleichmäßig wechselweise Schneidwerkzeuge mit geometrisch bestimmten feststehenden Schneiden und Schneidwerkzeuge mit geometrisch bestimmten rotierenden Schneiden anzuordnen, wobei die feststehenden Schneiden in Richtung der Werkzeugachse um weniger als 0,6 mm zurückgesetzt sind. Die feststehenden Werkzeuge übernehmen dabei die Funktion von vorschneidenden Schruppwerkzeugen und die rotierenden Schneidwerkzeuge die Funktion von nachschneidenden glättenden Schlichtwerkzeugen. Nachteilig an dieser Vorrichtung ist, dass die feststehenden Schneiden für das vorschneidende Schruppwerkzeug wieder einer einseitigen Abnutzung der Schneidkante mit den typischen Nachteilen einer feststehenden Schneidkante, wie beispielsweise erheblich höhere thermische Belastung und daher schnellerer Abrieb, ausgesetzt sind.

Aus der CH 480 120 ist ein Fräswerkzeug mit einem Werkzeugeinsatz mit ringförmiger Schneide bekannt, bei dem der Werkzeugeinsatz aktiv drehangetrieben wird. Dies ergibt eine technisch sehr aufwendige Gestaltung des Drehantriebs, wie er in zwei alternativen Ausführungsformen im Beschreibungstext behandelt ist. Darin ist die Rotationsachse des Werkzeugeinsatzes zur Achse des Grundkörpers (Fräskopf) "windschief" angeordnet, also in einer Tangentialebene in Bezug auf das Fräswerkzeug etwas schräg gestellt, so dass an der ringförmigen Schneide eine flache Ellipsenschneidkante entsteht. Durch diese Anordnung soll bei der CH 480 120 eine besondere Oberflächengüte, wie sie beispielsweise für Dichtungsflächen erwünscht ist, erreicht werden. Ein hohes Spanvolumen kann mit dieser Vorrichtung nicht erreicht werden, entsprechend dient sie ausschließlich dem Schlichtfräsen.

Aus dem Stand der Technik ist ferner gemäß der US 5,478,175 sowie der W0 2005/118192 ein spanabhebendes Werkzeug bekannt, bei dem eine Schneideinlage mit angeformten Bolzenabschnitt vorgesehen ist. Der Bolzenabschnitt ist in eine grundkörperseitige Bolzenaufnahme einführbar und dort drehbar festgelegt. Bei dieser Ausbildung des Standes der Technik bilden Schneide und Trägerelement eine Einheit, so dass ein Wechselvorgang nur mit dem Trägerelement vorgenommen werden kann, was insbesondere die Flexibilität des Einsatzes von handelsüblichen Wendeschneidplatten beeinträchtigt. Gemäß der US 2,885,766 sind zwar drehbar gelagerte Wendeschneidplatten offenbart, die als auswechselbare Schneiden auf Wellenstümpfen gelagert sind, wobei die Wellenstümpfe in am Fräskopf vorgesehenen Nestern jeweils endseitig eingebunden sind.

Aufgabe der Erfindung ist es, ein Fräs- und/oder Drehwerkzeug ausschließlich mit frei drehbaren und wechselbaren Wendeplatten anzugeben, das ein gleichmäßig gutes Schneidergebnis auch bei größeren Schnitttiefen bzw.

Vorschüben ermöglicht und eine hohe Stand- und Wegezeit hat, und *insbesondere die Gefahr von Rattermarken auf der Werkstückoberfläche unterbunden werden soll.*

Gelöst wird diese Aufgabe mit einem Fräs- und/oder Drehwerkzeug mit den Merkmalen des Patentanspruchs 1.

Die um ihre eigene Symmetrieachse drehbare, kreisscheibenförmige Wendeplatte wird beim spanabhebenden Bearbeiten über das zu bearbeitende Werkstück geführt und dabei in Rotationsbewegung gebracht. Während der Bearbeitung verdreht sich also die Wendeplatte mit ihrer Schneidkante auf dem zu bearbeitenden Werkstück, so dass stets ein anderer Abschnitt der Schneidkante des Bearbeitungsmittels mit der Oberfläche des zu bearbeitenden Werkstücks in Berührung gelangt. Damit wird einerseits erreicht, dass die Wendeplatte einer erheblich geringeren thermischen Belastung ausgesetzt ist und ihre Schneidkante im Wesentlichen über den gesamten Umfang gleichmäßig abgenutzt wird. Die Standzeit der Wendeplatte wird somit erheblich gesteigert, da jeder Abschnitt der kreisförmigen Schneidkante des Bearbeitungsmittels mit dem Werkstück in Berührung gelangt. Ferner entfällt die meist manuell durchzuführende Verstellung (Wenden) der Wendeplatte, da durch die drehbare Lagerung ein freies Mitdrehen der Wendeplatte bei der spanabhebenden Bearbeitung eines Werkstücks gewährleistet ist. Der Anstellwinkel (Freiwinkel) sowie die Verstellung der Drehachse im Werkzeug zur Tangentialebene bezüglich der Drehachse des Werkzeugs (Fräskopfes) entscheiden über die Drehrichtung und Relativgeschwindigkeit der Drehbewegung der Wendeplatte beim spanabhebenden Bearbeiten.

Durch die erfindungsgemäße Anordnung der Wendeplatte auf einem Trägerelement, wird die Wendeplatte nicht unmittelbar drehbar gehaltert, sondern auf einem Trägerelement befestigt, das drehbar in dem Werkzeug gehaltert ist. Die drehbare Lagerung des Trägerelements im Werkzeug kann dabei erheblich präziser ausgeführt werden, als eine unmittelbar frei drehende Wendeplatte, wie sie beispielsweise in der DD 118 543 beschrieben ist. Bei präziser Ausführung der Passung des Trägerelements mit seinem Wellenstummel in einer Aufnahmebohrung im Werkzeug werden auch bei hohen Spanvolumen, also bei größeren Schnitttiefen bzw. Vorschüben Rattermarken auf der Werkstückoberfläche vermieden.

Ferner ist vorteilhaft, dass bei einem etwaigen Werkzeugcrash, also einem zu harten Aufsetzen des Fräskopfes auf der Werkstückoberfläche, das zwischen Wendeplatte und Werkzeug angeordnete Trägerelement eine Schutzfunktion in der Art übernimmt, dass Beschädigungen am Werkzeug (Fräskopf) weitestgehend vermieden werden. Häufig können sogar die Wendeplatten noch verwendet werden, da die Verformungsenergie bei einem derartigen Werkzeugcrash im Wesentlichen vom Trägerelement aufgenommen wird. Nach Austausch des Trägerelements und ggf. der Wendeplatte kann das Werkzeug wieder weiterverwendet werden.

Dadurch, dass das Trägerelement eine Anlagefläche für die kreisscheibenförmige Wendeplatte aufweist, werden die beim spanabhebenden Bearbeiten auf die Wendeplatte wirkenden Kräfte großflächig über die Anlagefläche auf das Trägerelement übertragen. Insbesondere an der jeweiligen Wendeplatte wirkende Kippmomente können somit weitgehend starr in das Werkzeug (Fräskopf) abgeleitet werden. Entsprechend wird die Gefahr von Rattermarken auf der Werkstückoberfläche verringert. In der Folge kann das Spanvolumen beim spanenden Bearbeiten weiter erhöht werden.

Wenn zwischen Wellenstummel und Sackbohrung eine zwischen einer Offenstellung und einer Schließstellung verstellbare Rasteinrichtung zum schnellen Wechsel des mit der Wendeplatte bestückten Trägerelementes vorgesehen ist, kann bei einer derartigen Drehlagerung ein Schnellwechsel realisiert werden, bei dem jeweils eine auf einem Trägerelement befestigte Wendeplatte an dem Werkzeug durch Tausch der Trägerelement/Wendeplatten-Einheit ausgewechselt werden kann. Bei Abnutzung der Wendeplatten kann somit ein sehr schneller Wechsel der Wendeplatten erfolgen, so dass die Stillstandzeiten für die spanabhebende Maschine gegenüber der herkömmlichen Auswechselung von Wendeplatten erheblich verkürzt werden kann. Ferner können verschiedene Wendeplatten auf Trägerelementen als Trägerelement/- Wendeplatten-Einheit vorgehalten werden, die dann je nach Bearbeitungsbedarf gewechselt werden können.

In einer ersten Ausführungsform besteht die Rasteinrichtung aus einer Feder vorbelasteten Kugel und einer in den Wellenstummel eingeschnittenen Ringnut, wobei die Feder vorbelastete Kugel in einer im Wesentlichen radial zum Wellenstummel und der Bohrung orientierten Aufnahmebohrung im Werkzeug angeordnet ist und bei bestimmungsgemäßem Betrieb in Schließstellung der Rasteinrichtung die Kugel mit der Ringnut in Eingriff steht. Die Kugel bewirkt somit einen Rastverschluss in bestimmungsgemäßer Lage des Trägerelements im Fräskopf. Zum Wechsel des Trägerelements wird dieses gegen die Federbelastung der Kugel aus dem Passsitz im Fräskopf herausgezogen.

In einer alternativen Ausführungsform besteht die Rasteinrichtung aus einem im Wesentlichen tangential zum Wellenstumniel/Sackbohrung angeordneten, federnd gelagerten Stift und einer in den Wellenstummel eingeschnittenen Ringnut, wobei bei bestimmungsgemäßem Betrieb der Stift mit der Ringnut in Eingriff steht. Bei einer derartigen Konstruktion kann durch manuelles Drücken des federnd gelagerten Stiftes gegen seine Federkraft die frei drehbare Rasteinstellung freigegeben werden, um das Trägerelement mit Wendeplatte auszutauschen. Nach dem Einsetzen des Wechselträgerelements mit neuer Wendeplatte rastet beim Loslassen des Stiftes automatisch der Stift in die Ringnut im Wellenstummel des Trägerelementes ein, so dass eine passgenaue Fixierung der auf dem Trägerelement befestigten Wendeplatte bei gleichzeitig erlaubter Drehung um die Symmetrieachse gewährleistet ist.

Dadurch, dass der Wellenstummel oder das ganze Trägerelement mit Wellenstummel aus Bronze gefertigt ist, wird eine passgenaue und dauerhafte Gleitlagerung des Trägerelements im Werkzeug erreicht. Dabei dient der aus einem festen, verschleißfähigen Material (Bronze) gefertigte Wellenstummel als weicheres Verschleißteil, das keinen nennenswerten Abrieb im Werkzeug (Fräskopf) erzeugt. Von Zeit zu Zeit müssen die Trägerelemente nach Erreichen einer Abriebtoleranz ausgetauscht werden.

Alternativ sind das Trägerelement und die Wendeplatte einstückig aus einem Verbundwerkstoff hergestellt. Dabei wird ein als Schneidwerkzeug geeigneter Werkstoff mit einem Werkstoff verbunden, der als Trägerelement geeignet ist. Alternativ kann der Trägerelementbereich auch geeignet beschichtet sein. Bei der einstückigen Ausgestaltung ist selbstverständlich nur ein Komplettaustausch der Trägerelement/Wendeplatten-Einheit möglich.

In einer aufwendigeren Gestaltung kann das Trägerelement auch kugelgelagert im Werkzeug angeordnet sein.

Um bei der spanenden Bearbeitung eine nach innen gerichtete Drehbewegung der Wendeplatte/Trägerelement-Einheit zu bewirken, ist das Werkzeug als Fräskopf ausgebildet, der beim Fräsen um eine Rotationsachse gedreht wird, wobei die Achse in Tangentialrichtung zur Rotationsachse oder in einem ersten Winkel von bis zu 30°, insbesondere bis zu 10° in der Radialebene der Rotationsachse aus der Tangentialrichtung in Bewegungsrichtung der Schneide über die Werkstückoberfläche nach innen gestellt angeordnet ist.

Dadurch, dass die Achse aus der Radialebene zur Rotationsachse mit einem zweiten Winkel von 0° bis 30°, insbesondere 5° bis 15° mit seinem die Wendeplatte tragenden Ende auf die Werkstückoberfläche geneigt angeordnet ist, wird ein Anstellwinkel der an der Wendeplatte ausgebildeten Schneide angegeben, der eine effektive Spanabnahme an der Werkstückoberfläche ermöglicht.

Nachfolgend wird die Erfindung in drei Ausführungsbeispielen anhand der beiliegenden Zeichnungen detailliert beschrieben.

Darin zeigt:
- Fig. 1: ein Fräswerkzeug in einer ersten Ausführungsform in teils geschnittener Ansicht mit fünf Wendeplatten,
- Fig. 2: den in Figur 1 dargestellten Fräskopf entlang einem in Figur 1 mit A-A definierten Schnitt,
- Fig. 3: ein Trägerelement in einer ersten Ausführungsform in vergrößerter Längsschnittdarstellung,
- Fig. 4: eine Teilansicht eines Fräswerkzeugs in einer zweiten Ausgestaltung mit Schnellwechselrasteinrichtung und
- Fig. 5: in einem Ausschnitt eine dritte Ausführungsform eines Fräswerkzeugs mit einer Schnellwechselrasteinrichtung.

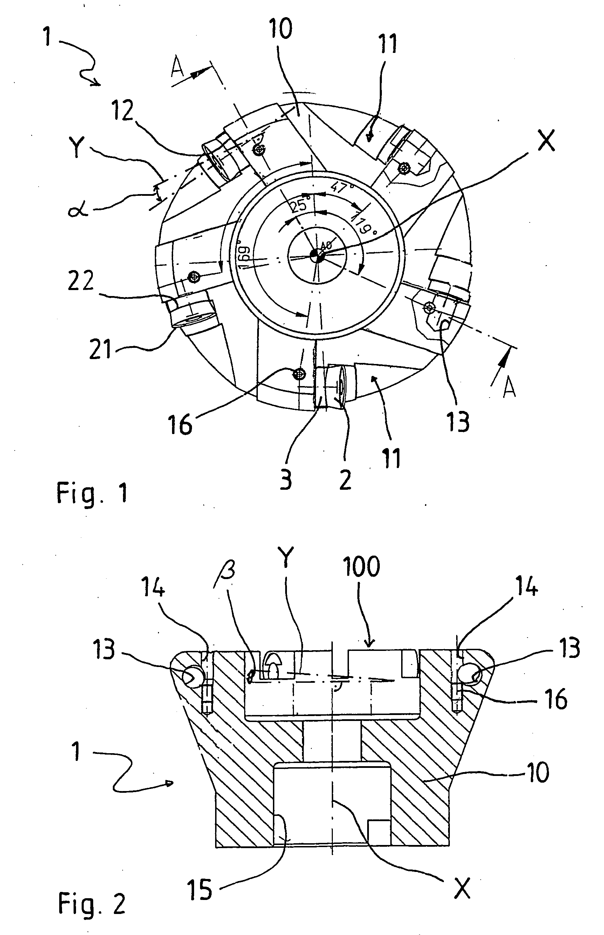

In Fig. 1 ist ein Werkzeug in Form eines Fräskopfes 1 in einer Ansicht auf seine Bearbeitungsfläche 100 dargestellt. Der Fräskopf 1 weist einen Fräskörper 10 aus einem geeigneten Werkzeugstahl auf, der im dargestellten Ausführungsbeispiel, wie aus Figur 1 und aus der Querschnittdarstellung entlang der in Figur 1 dargestellten Linie A-A in Figur 2 ersichtlich, im Wesentlichen die Form eines Kegelstumpfes hat. Dabei ist die einen größeren Durchmesser aufweisende Seite des Fräskörpers 10 die Bearbeitungsseite 100 des Fräskopfes 1, die beim bestimmungsgemäßen Gebrauch des Fräskopfes 1 auf einem Werkstück zur spanabhebenden Bearbeitung, beispielsweise Planfräsen, aufliegt. In Figur 1 ist diese Bearbeitungseite 100 die Ansichtseite, in Figur 2 ist dies die im Querschnitt oben dargestellte Begrenzung des Fräskörpers 10.

Der Fräskörper 10 ist somit Rotationssymmetrisch zu einer orthogonalen zur Bearbeitungsseite 100 ausgebildeten Rotationsachse X ausgebildet. Koaxial zu dieser Rotationsachse X ist eine Aufnahme 15 zur Befestigung an einer nicht dargestellten Welle einer Werkzeugmaschine vorgesehen.

Ferner zeigt Figur 1 fünf in den Fräskörper 10 zueinander gleichwinklig beabstandete Ausschnitte 11, die Raum zur Aufnahme von Wendeplatten 2 am Fräskörper 10 bilden. Jeder Ausschnitt 11 hat eine zur Rotationsachse X annähernd in einer Axialebene ausgerichtete Anlagefläche 12, die beim dargestellten Ausführungsbeispiel in einem Winkel von α = 4° zur Axialebene verstellt ist. Ferner ist diese Anlagefläche 12 um die jeweilige Radialachse mit einem positiven Schneidwinkel von β = 8° (siehe Fig. 2) geneigt. Diese Winkelkonstellation des Anstellwinkels der Wendeplatte 2 im Fräskopf 1 und damit deren Anstellwinkel auf der Werkstückoberfläche ist abhängig von einer Vielzahl von Faktoren, wie beispielsweise der Geometrie der verwendeten Wendeplatte 2, dem gewünschten Verwendungszweck, insbesondere dem zu bearbeitenden Material, dem Bearbeitungszweck, dem gewünschten Spanvolumen, der zu erreichenden Oberflächengüte etc. Entsprechend können diese Winkel erheblich variieren.

Die Wendeplatte2 besitzt eine kreisrund umlaufende Schneidkante 21, die symmetrisch zu einer Achse Y, der Drehachse der Wendeplatte 2, ausgebildet ist. Im dargestellten Ausführungsbeispiel hat die Wendeplatte 2 die Form eines schwach ausgebildeten Kegelstumpfes oder annähernd einer Kreisscheibe mit einer planebenen Rückseite 22, die als Abstützfläche dient.

Orthogonal in die Anlagefläche 12 ist eine Sackbohrung 13 in den Fräskörper 10 eingebracht, wie dies in Figur 1 in einem Teilquerschnitt und in Figur 2 dargestellt ist. Senkrecht zur Sackbohrung 13 ist ferner eine die Sackbohrung 13 teilweise durchschneidende Stiftbohrung 14 im Fräskörper 10 angeordnet. Im in den Figuren 1 und 2 dargestellten Ausführungsbeispiel ist die Stiftbohrung 14 parallel zur Rotationsachse X des Fräskopfes 1 ausgerichtet. Alternativ kann die Bohrung 13 auch als Stufenbohrung mit einem verminderten Durchmesser durch den Fräskörper 10 durchbohrt ausgebildet werden.

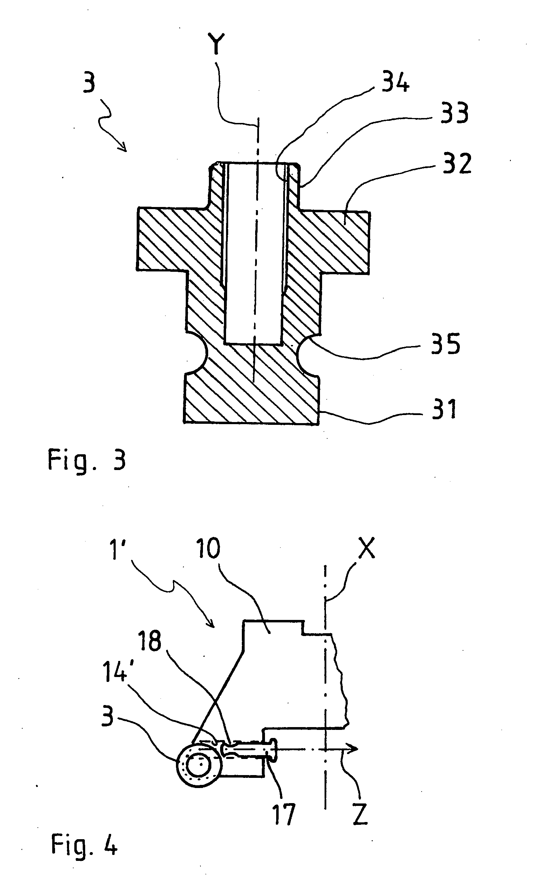

Alternativ kann die Stiftbohrung14 auch in zur Rotationsachse X radialer Richtung im Fräskörper 10, bevorzugt von der Innenseite des Fräskörpers 10 im Bereich der Aufnahme 15 eingebracht sein, wie dies in Figur 4 in einer geschnittenen Teilansicht eines Fräskopfes1' in einer zweiten Ausführungsform dargestellt ist.

Wie in Figur 1 in der Ansicht dargestellt, ist die Wendeplatte 2 erfindungsgemäß nicht unmittelbar am Fräskopf 1 drehbar gelagert. Vielmehr ist die Wendeplatte 2 auf einem Trägerelement 3 befestigt, welches in der Bohrung 13 im Fräskörper 10 drehbar gelagert ist. Das Trägerelement 3 ist ein zylindersymmetrisches Bauteil, das einen Wellenstummel 31, eine Anlageplatte 32 sowie eine Zentrieraufnahme 33 für die Wendeplatte 2 besitzt, wie aus Fig. 3 ersichtlich. Koaxial zur Zylinderachse des Trägerelements 3, die mit der Drehachse Y zusammenfällt, ist in die Zentrieraufnahme 33 eine Sackbohrung 34 mit Gewinde eingebracht.

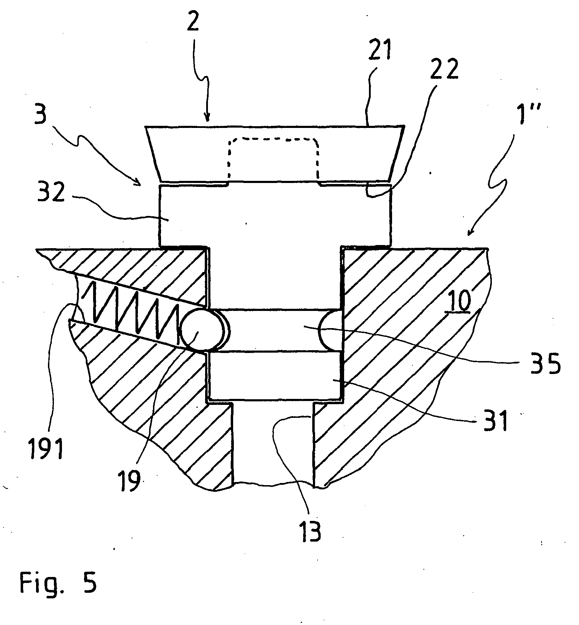

Die Wendeplatte 2 wird auf die Zentrieraufnahme 33 aufgesteckt und mittels einer nicht dargestellten Schraube, die in die Sackbohrung 34 mit Gewinde eingreift, auf dem Trägerelement 3 unter Anlage der Rückseite 22 der Wendeplatte 2 fest verspannt (siehe auch Fig. 5). Der Wellenstummel 31 des Trägerelementes3 weist eine umlaufende Ringnut 35 auf. Die Symmetrieachse (Zylinderachse) des Trägerelementes 3 bildet die Drehachse Y der Wendeplatte 2.

Das mit der Wendeplatte bestückte Trägerelement 3 wird in die Sackbohrung 13 des Fräskopfes 1 eingesteckt und gemäß Ausgestaltung der Figuren 1 und 2 mit einer Madenschraube 16, die in die Stiftbohrung 14 einschraubbar ist, fixiert. Dabei greift die Madenschraube 16 in die Ringnut 35 des Wellenstummels 31 des Trägerelementes 3 ein, so dass das Trägerelement 3 mit Wendeplatte 2 frei drehbar am Fräskopf 1 fixiert ist.

In alternativer Ausgestaltung gemäß Figur 4 ist in dem dort dargestellten Fräskopf 1' eine Stiftbohrung14' in zur Rotationsachse X des Fräskopfes 1' radialer Ausrichtung angeordnet. In dieser Stiftbohrung 14' ist ein federbelasteter zylindrischer Stift 17 eingesetzt, dessen zylindrischer Abschnitt in nicht betätigter Normalstellung (federbelastet) mit der Ringnut 35 des Trägerelementes 3 zusammenwirkt, so dass das mit der Wendeplatte 2 versehene Trägerelement 3 frei drehbar aber gesichert in der Sackbohrung 13 gelagert ist. Bei manueller Betätigung des Stiftes 17 gegen die Federkraft wird der Stift 17 in Pfeilrichtung Z in der Stiftbohrung 14' verschoben, so dass eine im Stift 17 eingestochene Ringnut 18 mit der Sackbohrung 13 fluchtet, so dass der Eingriff mit der Ringnut 35 des Trägerelementes 3 aufgehoben ist und das Trägerelement 3 aus der Sackbohrung13 entnehmbar ist.

Die Ausgestaltung gemäß Figur 4 erlaubt somit einen schnellen Wechsel der mit Wendeplatte 2 versehenen Trägerelemente 3, beispielsweise bei Erreichen der Abriebgrenzen der Schneidkante 21 der Wendeplatte 2. Durch die einfache manuelle Betätigung zur Entriegelung der Trägerelemente 3 am Fräskopf 1' kann der Werkzeugeinrichter bei einem erforderlichen Austausch der Wendeplatten 2 schnell die erforderlichen Schritte durchführen und unmittelbar danach die weitere Produktion mit neu eingesteckter Trägerelement/- Wendeplatten-Einheit fortführen. Der zeitliche Ausfall der Werkzeugmaschine für den Austausch der Wendeplatten ist minimiert, woraus sich erhebliche wirtschaftliche Vorteile ergeben. Die Wendeplatten 2 können vormontiert auf passenden Trägerelementen 3 für einen Wechsel vorgehalten werden.

In Fig. 5 ist in einem Ausschnitt eines Fräswerkzeugs 1" eine Schnellwechselrasteinrichtung mit dem zugeordneten Trägerelement 3 dargestellt. Die Rasteinrichtung nach diesem Ausführungsbeispiel weist eine in einer Aufnahmebohrung 191 federnd gelagerte Kugel 19 im Fräskörper 10 auf, die so angeordnet ist, dass sie mit der Ringnut 35 des Trägerelementes 3 zur frei drehbaren Fixierung des Trägerelementes in der Bohrung 13 zusammenwirkt. Beim Einstecken des Trägerelementes 3 in die Bohrung 13 federt die in der Aufnahmebohrung 191 im Fräskopf 1" geführte Kugel 19 zurück und springt bei vollständigem Einstecken des Trägerelementes 3 in die Ringnut 35 am Wellenstummel 31, um so die frei drehbare Fixierung zu erreichen. Beim Entnehmen des Trägerelementes 3 muss die Federkraft der in der Ringnut 35 eingreifenden Kugel 19 überwunden werden.

Ferner ist in Fig. 5 auf dem Trägerelement 3 auf Zentrieraufnahme 33 die Wendeplatte 2 fest montiert dargestellt. Die Wendeplatte 2 bildet somit mit ihrer planen Rückseite anliegend an der Anlageplätte 32 mit dem Trägerelement 3 eine starre Verbindung. Ebenso stützt sich die Anlageplatte 32 auf der innen liegenden Seite an dem Fräskopf 1" bei vollständig in der Bohrung 13 eingestecktem Trägerelement 3 ab. Entsprechend können die auf der Wendeplatte 2 wirkenden erheblichen Kräfte bei der spanenden Bearbeitung spielfrei in den Fräskopf geleitet werden. Auch teils an der Wendeplatte 2 bzw. dem Trägerelement 3 wirkende Kippmomente können so großflächig über die Anlageplatte 32 am Fräskörper 10 und dem Wellenstummel 31 in der Bohrung 13 abgestützt und in den Fräskopf geleitet werden. Folglich wird die Gefahr von Rattermarken auf der Werkstückoberfläche bei der spanabhebenden Bearbeitung weitestgehend vermieden. Diese Stützfunktion des Trägerelementes 3 ist bei allen erfindungsgemäßen Ausgestaltungen verwirklicht.

In einem Prototypen wurde festgestellt, dass bei einem Trägerelement 3 aus Bronze mit einer darauf montierten Hartmetallwendeplatte 2 an einem 5-armigen Fräskopf mit einem Durchmesser von 100 mm entsprechend dem in Fig. 1 dargestellten Ausführungsbeispiel bei kompletter Fräsbreite eine Schnittgeschwindigkeit bis 500 m/min problemlos anwendbar ist. Bei einem Zahnvorschub FZ = 0,8 mm, entsprechend einem Vorschub pro Drehung des Fräskopfes von 4,0 mm entstehen keine Rattermarken auf der bearbeiteten Werkstückoberfläche eines Werkstücks aus Stahl St52. Die Standzeit der Wendeplatten beträgt bei kompletter Fräsbreite mindestens 200 m.

### Bezugszeichenliste

- 1,1',1": (Fräs- und/oder Dreh-) Werkzeug, Fräskopf
- 10: Fräskörper
- 100: Bearbeitungsfläche, -seite
- 11: Ausschnitt
- 12: Anlagefläche
- 13: Bohrung, Sackbohrung
- 14,14': Stiftbohrung
- 15: Aufnahme
- 16: Madenschraube
- 17: Stift
- 18: Ringnut
- 19: Kugel
- 191: Aufnahmebohrung

- 2: Wendeplatte
- 21: Schneide, Schneidkante
- 22: Rückseite

- 3: Trägerelement
- 31: Wellenstummel
- 32: Anlageplatte
- 33: Zentrieraufnahme
- 34: Sackbohrung
- 35: Ringnut

- X: Rotationsachse des Fräskopfes
- Y: Drehachse der Wendeplatte
- Z: Pfeil

## Patentansprüche

1. Fräs- und/oder Drehwerkzeug (1) zum spanabhebenden Bearbeiten von Werkstücken mit wenigstens einer am Werkzeug (1) frei drehbar um eine Achse (Y) gelagerten kreisscheibenförmigen Wendeplatte (2), die eine rotationssymmetrisch zur Achse (Y) ausgebildete Schneide (21) aufweist und die mit ihrer Schneide (21) relativ zu einer Oberfläche des zu bearbeitenden Werkstücks bewegt wird, und die Wendeplatte (2) ein Trägerelement (3) aufweist, welches koaxial zur Achse (Y) einen Wellenstummel (31) bildet, der in einer Bohrung (13) im Werkzeug (1) drehbar geführt ist,
**dadurch gekennzeichnet,**
***dass*** *das Trägerelement (3) eine Anlagefläche für die kreisscheibenförmige Wendeplatte (2) aufweist, zur Übertragung der beim spanabhebenden Bearbeitung auf die Wendeplatte wirkenden Kräfte großflächig über die Anlagefläche auf das Trägerelement (3),* und wobei zwischen Wellenstummel (31) und Sackbohrung (13) eine zwischen einer Offenstellung und einer Schließstellung verstellbare Rasteinrichtung zum schnellen Wechsel des mit der Wendeplatte (2) bestückten Trägerelementes (3) vorgesehen ist.

2. Fräs- und/oder Drehwerkzeug nach Anspruch 1,
**dadurch gekennzeichnet,**
**dass** die Rasteinrichtung aus einer Feder vorbelasteten Kugel (19) und einer in den Wellenstummel (31) eingeschnittenen Ringnut (35) besteht, wobei die Feder vorbelastete Kugel (19) in einer im Wesentlichen radial zum Wellenstummel (31) und der Bohrung (13) orientierten Aufnahmebohrung (191) im Werkzeug (1) angeordnet ist und bei bestimmungsgemäßem Betrieb in Schließstellung der Rasteinrichtung die Kugel (19) mit der Ringnut (35) in Eingriff steht.

3. Fräs- und/oder Drehwerkzeug nach Anspruch 2,
**dadurch gekennzeichnet,**
**dass** die Rasteinrichtung aus einem im Wesentlichen tangential zum Wellenstummel (31) und zur Sackbohrung (13) angeordneten, federnd gelagerten Stift (17) und einer in den Wellenstummel (31) eingeschnittenen Ringnut (35) besteht, wobei bei bestimmungsgemäßem Betrieb in Schließstellung der Rasteinrichtung der Stift (17) mit der Ringnut (35) in Eingriff steht.

4. Fräs- und/oder Drehwerkzeug nach einem der vorangehenden Ansprüche,
**dadurch gekennzeichnet,**
**dass** der Wellenstummel (31) oder das ganze Trägerelement (3) mit Wellenstummel (31) aus einem festen, verschleißfähigen Material, z. B. Bronze, gefertigt ist.

5. Fräs- und/oder Drehwerkzeug nach einem der vorangehenden Ansprüche,
**dadurch gekennzeichnet,**
**dass** es als Fräskopf (1) ausgebildet ist, der beim Fräsen um eine Rotationsachse (X) gedreht wird, wobei die Achse (Y) in Tangentialrichtung zur Rotationsachse (X) oder in einem ersten Winkel (α) von bis zu 30°, insbesondere bis zu 10° in der Radialebene der Rotationsachse (X) aus der Tangentialrichtung in Bewegungsrichtung der Schneide (21) über die Werkstückoberfläche nach innen gestellt angeordnet ist.

6. Fräs- und/oder Drehwerkzeug nach Anspruch 6,
**dadurch gekennzeichnet,**
**dass** die Achse (Y) aus der Radialebene zur Rotationsachse (X) mit einem zweiten Winkel (β) von 0° bis 30°, insbesondere 5° bis 15° mit seinem die Wendeplatte (2) tragenden Ende auf die Werkstückoberfläche geneigt angeordnet ist.

## Claims

1. A milling and/or turning tool (1) for the chip-removing processing of workpieces with at least one circular disc-shaped reversing plate (2) mounted freely rotatably about an axis (Y) having a cutting edge (21) formed rotation-symmetrically to the axis (Y) and which with its cutting edge (21) is moved relative to a surface of the workpiece to be processed and the reversing plate (2) comprises a carrier element (3) which coaxially to the axis (Y) forms a shaft stub (31) which is rotatably guided in a bore (13) in the tool (1),
**characterized in that**
the carrier element (3) comprises a bearing surface for the circular disc-shaped reversing plate (2) for the transmission of the forces acting on the reversing plate during the chip-removing processing over a large area via the bearing surface on the carrier element (3), and wherein between shaft stub (31) and blind hole (13) an engagement device adjustable between an open position and a closing position for the rapid change of the carrier element (3) equipped with the reversing plate (2) is provided.

2. The milling and/or turning tool according to Claim 1,
**characterized in that**
the engagement device consists of a spring preloaded ball (19) and a ring slot (35) cut into the shaft stub (31) wherein the spring preloaded ball (19) is arranged in a mounting bore (191) in the tool (1) substantially orientated radially to the shaft stub (31) and the bore (13) and during the intended operation in closing position of the engagement device the ball (19) is in engagement with the ring slot (35).

3. The milling and/or turning tool according to Claim 2,
**characterized in that**
the engagement device consists of a resiliently mounted pin (17) substantially arranged tangentially to the shaft stub (31) and to the blind bore (13) and a ring slot (35) cut into the shaft stub (31), wherein upon intended operation in closing position of the engagement device the pin (17) is in engagement with the ring slot (35).

4. The milling and/or turning tool according to any one of the preceding claims,
**characterized in that**
the shaft stub (31) or the entire carrier element (3) with shaft stub (31) is manufactured of a strong, wear-capable material such as bronze.

5. The milling and/or turning tool according to any one of the preceding claims,
**characterized in that**
it is designed as milling head (1) which during milling is rotated about an axis of rotation (X), wherein the axis (Y) in tangential direction to the axis of rotation (X) or at a first angle (α) of up to 30°, more preferably up to 10° in the radial plane of the axis of rotation (X) is arranged set to the inside from the tangential direction in movement direction of the cutting edge (21) via the workpiece surface.

6. The milling and/or turning tool according to Claim 6,
**characterized in that**
the axis (Y) is arranged inclined to the workpiece surface from the radial plane to the axis of rotation (X) with a second angle (β) of 0° to 30°, more preferably 5 to 15° with its end carrying the reversing plate (2).

## Revendications

1. Outil de fraisage et/ou de tournage (1) pour l'usinage par enlèvement de copeaux de pièces comprenant au moins une plaque réversible (2) de forme circulaire, fixée sur la pièce (1) de façon à pouvoir tourner librement autour d'un axe (Y), qui présente une lame (21) conçue de façon symétrique en rotation par rapport à l'axe (Y) et qui est déplacée avec sa lame (21) par rapport à une surface de la pièce à usiner, et la plaque réversible (2) présentant un élément support (3), qui forme sur le même axe que l'axe (Y) un bout d'arbre (31), qui est guidé de façon rotative dans un alésage (13) dans l'outil (1),
**caractérisé en ce que**
l'élément support (3) présente une surface d'appui pour la plaque réversible (2) en forme de disque circulaire, pour la transmission des forces, agissant lors de l'usinage par enlèvement de copeaux sur la partie réversible, sur une grande surface par la surface d'appui à l'élément support (3) et un dispositif d'encliquetage réglable entre une position ouverte et une position de fermeture étant prévu entre le bout d'arbre (31) et l'alésage borgne (13) pour le changement rapide de l'élément support (3) équipé de la plaque réversible (2).

2. Outil de fraisage et/ou de tournage selon la revendication 1,
**caractérisé en ce que**
le dispositif d'encliquetage est composé d'une bille (19) pré-sollicitée avec un ressort et d'une rainure annulaire (35) entaillée dans le bout d'arbre (31), la bille (19) pré-sollicitée avec le ressort étant disposée dans l'outil (1) dans un alésage de logement (191) orienté sensiblement radialement par rapport au bout d'arbre (31) et à l'alésage (13) et la bille (19) étant en prise avec la rainure annulaire (35) en fonctionnement normal dans la position de fermeture du dispositif d'encliquetage.

3. Outil de fraisage et/ou de tournage selon la revendication 2,
**caractérisé en ce que**
le dispositif d'encliquetage est constitué d'une broche (17) fixée de façon élastique et disposée tangentiellement au bout d'arbre (31) et à l'alésage (13) et d'une rainure annulaire (35) entaillée dans le bout d'arbre (31), la broche (17) étant en prise avec la rainure annulaire (35) en fonctionnement normal dans la position de fermeture du dispositif d'encliquetage.

4. Outil de fraisage et/ou de tournage selon l'une quelconque des revendications précédentes,
**caractérisé en ce que**
le bout d'arbre (31) ou l'élément support (3) complet avec le bout d'arbre (31) est fabriqué dans un matériau rigide et résistant à l'usure, par exemple du bronze.

5. Outil de fraisage et/ou de tournage selon l'une quelconque des revendications précédentes,
**caractérisé en ce que**
il est conçu sous forme de tête de fraisage (1), qui est tournée lors du fraisage au tour d'un axe de rotation (X), l'axe (Y) étant disposé dans la direction tangentielle par rapport à l'axe de rotation (X) ou dans un premier angle (α) allant jusqu'à 30°, en particulier jusqu'à 10° dans le plan radial de l'axe de rotation (X) en étant placé à partir de la direction tangentielle dans la direction de déplacement de la lame (21) au-dessus de la surface de pièce vers l'intérieur.

6. Outil de fraisage et/ou de tournage selon la revendication 5,
**caractérisé en ce que**
l'axe (Y) est disposé à partir du plan radial vers l'axe de rotation (X) de façon inclinée avec un second angle (β) de 0° à 30°, en particulier de 5° à 15° avec son extrémité portant la plaque réversible (2) vers la surface de pièce.
